# EUROPEAN PATENT SPECIFICATION

(11) **EP 2 500 168 B1**
(45) Date of publication and mention of the grant of the patent: **27.09.2017**
(21) Application number: 10828295.5
(22) Date of filing: 04.11.2010
(51) Int. Cl.: B32B 15/06, C08J 5/12, C08K 3/36, C08K 5/548, C09J 109/02, C09J 161/06, C09J 183/14

(54) **LAYERED RUBBER/METAL PRODUCT**
GESCHICHTETES GUMMI-METALL-PRODUKT
PRODUIT DE CAOUTCHOUC/MÉTAL À COUCHES

(30) Priority: 09.11.2009 JP 2009255845
(43) Date of publication of application: 19.09.2012
(73) Proprietor: NOK Corporation, Minato-ku Tokyo 105-8585 (JP)
(72) Inventor: HIGASHIRA Toshihiro, Fujisawa-shi Kanagawa 251-0042 (JP)
(74) Representative: Hoffmann Eitle
(86) International application number: PCT/JP2010/069552
(87) International publication number: WO 2011/055735

(56) References cited:
- EP-A1- 1 588 839
- WO-A1-2009/016922
- JP-A- 2007 038 533
- JP-A- 2008 195 881

## Description

### TECHNICAL FIELD

The present invention relates to a rubber metal laminate. More particularly, the present invention relates to a rubber metal laminate that is a laminate of NBR and metal.

### BACKGROUND ART

In engine gasket parts and other parts that undergo significant temperature changes, fretting (wear) occurs between the bonding surface of the engine and the gasket due to the temperature changes. Rubber metal laminates used as gaskets have drawbacks in that, for example, such fretting leads to high shear stress, furthermore friction between the rubber and the metal causes peeling and wear of the rubber, and the rubber layer is consequently removed from the metal.

Here, it is difficult to prevent wear or peeling of the rubber used in the rubber metal laminate by increasing the proportion of carbon black, which is generally used to improve the friction and wear resistance characteristics of rubber. There is a method to reduce rubber wear by applying a solution of PTFE or polyethylene resin to the rubber surface so as to reduce friction coefficient; however, when peeling or wear of coating formed from such a solution occurs, the rubber may be worn immediately. Thus, the problem of this method is to improve the friction and wear resistance characteristics of the rubber itself.

Moreover, in the case of poor adhesion, rubber peeling is inevitable even when the rubber is not worn during friction and wear. Conversely, even in the case of excellent adhesion, the rubber is worn when the wear resistance of the rubber is low. In order to improve the wear resistance of the rubber of the rubber metal laminate, it is necessary to enhance the wear resistance of the rubber itself, as well as to increase the adhesion to the metal.

To form rubber-metal composites for which resistance to water or LLC (long life coolant) is required, stainless steel is mainly used as the metal; however, stainless steel-rubber composites in which rubber is vulcanization-bonded on stainless steel through a vulcanization adhesive directly applied to the stainless steel has low water resistance and low LLC resistance. When these composites are subjected to the immersion tests, peeling of their adhesive layers occurs.

As countermeasure to these problems, various proposals have been made to improve liquid resistance by applying, on a metal plate, a silane-based undercoat agent as a primer, and a phenol resin-based topcoat agent as an adhesive. However, these methods cannot lead to adhesion equivalent to that of stainless steel subjected to coating-type chromate treatment containing hexavalent chromium ions, which are undesirable on environmental grounds. Therefor, recent engines and antifreeze solutions problematically cause rubber peeling. Furthermore, phenol resin-based topcoat adhesives are vulnerable to LLC and high-temperature wear, and compression at high surface pressure causes peeling of the adhesive layer.

The present applicant has made various proposals regarding rubber metal laminates. For example, some of them are listed below:
- Patent Documents 1 and 2 disclose rubber metal laminates in which rubber is laminated on a stainless steel plate via a primer layer and a phenol resin-based adhesive layer, wherein the primer layer is a surface treating agent layer comprising an organometallic compound and silica, or a base treatment layer comprising a silane coupling agent, an organometallic compound, and silica.
- Patent Document 3 discloses a method for producing a metal/rubber composite material, the method comprising applying an adhesive to a metal plate that is not subjected to a coating-type chromate treatment; applying thereto a water-based rubber coating solution comprising an aqueous NBR latex and an aqueous dispersion of carbon black particles, followed by drying; and performing press vulcanization. Patent Document 3 indicates that the adhesive is at least one of a phenol-based adhesive and a silane- or titanate-based coupling agent. As typical examples of silane-based coupling agents, Patent Document 3 refers to methoxysilanes and ethoxysilanes having functional groups, such as vinyl group, amino group, and mercapto group.
- Patent Document 4 discloses a method for producing a gasket, in which a sealing material is adhered to a substrate by applying an adhesive to a predetermined portion of the substrate through a nozzle of an inkjet head. Usable sealing materials are nitrile rubber, etc. The adhesive is applied after a suitable primer is optionally applied. As usable solution-type adhesives, Patent Document 4 refers to silane-based adhesives, such as vinyltrimethoxysilane, vinyltriethoxysilane, vinyltris(2-methoxyethoxy)silane, and vinyltris(2-ethoxyethoxy)silane; or solutions comprising a novolak-type or resol-type phenol resin, a curing agent (e.g., hexamethylenetetramine), a filler, and a solvent.
- Patent Document 5 discloses an adhesive for rubber metal laminates comprising novolak-type and resol-type phenol resins and NBR containing white carbon and aluminium oxide.

### PRIOR ART DOCUMENT

### PATENT DOCUMENT

Patent Document 1 : JP-A-2005-180682
Patent Document 2 : JP-A-2005-249031
Patent Document 3 : JP-B-3933017
Patent Document 4 : JP-A-2007-292274
Patent Document 5 : JP-A-2007-38533

### OUTLINE OF THE INVENTION

### PROBLEM TO BE SOLVED BY THE INVENTION

An object of the present invention is to provide a rubber metal laminate comprising NBR and metal that are bonded to each other through a phenol resin-based adhesive, the laminate having excellent friction and wear resistance at high temperatures and less decrease in adhesive strength after immersion in water or an antifreeze solution, and being capable of effectively preventing peeling, etc., caused thereby.

### MEANS FOR SOLVING THE PROBLEM

The above object of the present invention can be accomplished by a rubber metal laminate comprising NBR and metal that are bonded to each other through an adhesive comprising novolak-type and resol-type phenol resins, NBR, white carbon, and a vinyltrialkoxysilane coupling agent having an alkoxyl group containing two or more carbon atoms.

### EFFECT OF THE INVENTION

The rubber metal laminate of the present invention has excellent friction and wear resistance characteristics at high temperatures and less decrease in adhesive strength after immersion in water or an antifreeze solution, and is capable of effectively preventing peeling, etc., caused thereby.

Moreover, the rubber paste (NBR compound solution) used as an adhesive component in the present invention has preferable properties. That is, when a kneaded NBR compound prepared as an organic solvent solution is left, for example, for ten days in consideration of the circumstances of mass production, the increase in particle size remains slight, compared to an organic solvent solution prepared from an NBR compound immediately after kneading.

Furthermore, mixing a certain amount of rubber paste with a phenol resin-based adhesive can reduce the number of steps and cut the cost of adhesives. Preferably, when the same NBR as one used to form a rubber layer is used in an adhesive, an adhesive layer having excellent adhesion to the rubber layer can be formed.

In such an adhesive, the NBR improves adhesion to the rubber layer, and enhances the flexibility of the adhesive layer; the white carbon improves adhesion to the rubber layer and primer layer, and enhances the strength of the adhesive itself and water resistance; and the silane coupling agent improves adhesion to the rubber layer and primer layer, and enhances the strength of the adhesive itself and water resistance. Owing to these functions of each component, resistance to water or LLC can be improved, wear resistance at high temperatures can be enhanced, and peeling caused by compression at high surface pressure can be effectively prevented.

When an NBR compound comprising white carbon is left for a long period of time, silica aggregates. When an adhesive containing this silica aggregate is used, the adhesive-coated surface has roughness, reducing adhesion and wear resistance. This difficulty can be overcome by mixing a previously-prepared rubber paste with a phenol resin-based adhesive component. The NBR compound used in the preparation of rubber paste is stable over time.

### EMBODIMENTS FOR CARRYING OUT THE INVENTION

The rubber metal laminate of the present invention is produced by laminating NBR and metal with an adhesive comprising novolak-type and resol-type phenol resins, NBR, white carbon, and a vinyltrialkoxysilane coupling agent having an alkoxyl group containing two or more carbon atoms.

Usable examples of NBR to be bonded to metal, and NBR used as an adhesive component include acrylonitrile-butadiene copolymer rubbers having a combined acrylonitrile content (AN content) of 18 to 48%, preferably 31 to 42%, and having a Mooney viscosity ML₁₊₄ (100°C) of 30 to 85, preferably 40 to 70. Practically, commercial products having such properties can be used as they are.

In the case of the NBR to be bonded to metal, when the AN content is less than the above range, adhesion to the adhesive used to laminate the rubber layer becomes lower; whereas when the AN content is greater than that range, cold resistance is impaired. As for the Mooney viscosity, when the viscosity value is less than the above range, friction and wear resistance characteristics becomes inferior; whereas when the viscosity value is greater than that range, kneading processability is impaired.

As same with the NBR used as an adhesives component, the NBR forming the rubber layer is preferably used in combination with white carbon and a silane coupling agent having specific properties. Additionally, various compounding agents generally used in the rubber industry are suitably added. Examples thereof include fillers, such as carbon black; acid acceptors, such as zinc oxide; processing aids, such as stearic acid; antioxidants; paraffinic or polyester plasticizers; organic peroxide; vulcanization agents, such as sulfur; and the like. In terms of wear resistance, preferred fillers are inorganic fillers having a small particle size and high reinforcing properties. When an organic peroxide crosslinking agent is used, it is preferable to use it in combination with a polyfunctional unsaturated compound (e.g., triallyl isocyanurate) as a co-crosslinking agent.

Commercial products of organic peroxides include, for example, Perbutyl Z, Perhexa Z, Perbutyl P, Percumyl D, Perhexa 25B, Perbutyl C, Perbutyl D, and Percumyl P (produced by NOF Corporation). Further, examples of sulfur-based compounds include, in addition to sulfur, thiuram compounds, such as tetramethylthiuram disulfide, tetraethylthiuram disulfide, and tetramethylthiuram monosulfide; thiazole compounds, such as 2-mercaptobenzothiazole and dibenzothiazyl disulfide; dithiocarbamates, such as zinc dimethyldithiocarbamate, zinc diethyldithiocarbamate, and zinc dibutyldithiocarbamate; and the like.

The adhesive used to bond NBR and metal is one obtained by adding the aforementioned NBR, white carbon, and silane coupling agent having specific properties to novolak-type and resol-type phenol resin adhesives. The adhesive can be prepared in the following manner. NBR is mixed with various compounding agents using a kneading machine (e.g., an intermix, a kneader, or a Banbury mixer) or an open roll to prepare an NBR compound. The resulting NBR compound is dissolved in ketones, esters, ethers, aromatic hydrocarbons, or a mixed solvent thereof to prepare an organic solvent solution, which is a rubber paste. The resulting rubber paste is mixed with a solution of a phenol resin-based adhesive component, thereby preparing an adhesive. The adhesive can also be prepared by, without kneading NBR, dissolving each of the components in a solvent, and carrying out wet-precision dispersion using a triple-roll, a ball mill, a homogenizer, or the like.

As phenol resins, a novolak-type phenol resin and a resol-type phenol resin are used in combination. Examples of novolak-type phenol resins include resins having a melting point of 80 to 150°C obtained by condensation of formaldehyde and phenols having two or three substitutable nucleus hydrogen atoms at o-position and/or p-position with respect to the phenolic hydroxyl group, such as phenol, p-cresol, m-cresol, and p-tert-butylphenol, or mixtures thereof in the presence of an acid catalyst, such as oxalic acid, hydrochloric acid, or maleic acid. Preferably, resins having a melting point of 120°C or more formed from m-cresol and formaldehyde are used.

Examples of resol-type phenol resins include resins obtained by condensation of formaldehyde and phenols having two or three substitutable nucleus hydrogen atoms at o-position and/or p-position with respect to the phenolic hydroxyl group, such as phenol, p-cresol, m-cresol, or p-tert-butylphenol, or mixtures thereof in the presence of an alkaline catalyst, such as ammonia, alkali metal hydroxide, or magnesium hydroxide.

The proportion of these two types of phenol resins are as follows. The amount of resol-type phenol resin is about 10 to 1000 parts by weight, preferably about 60 to 400 parts by weight, based on 100 parts by weight of novolak-type phenol resin. These components are prepared as a phenol resin-based adhesive by adding an organic solvent thereto so that the total concentration of the components is about 3 to 10 wt.%, and mixing and stirring the mixture. When the amount of resol-type phenol resin used is less than this range, adhesion to the metal surface decreases; whereas when the amount is greater than this range, adhesion to the rubber layer decreases. When only the resol-type phenol resin is used, rubber surface peeling occurs in a compression test. Together with these phenol resins, hexamethylenetetramine, etc., which are curing agents thereof, can also be used.

Practically usable phenol resin-based adhesives for NBR include commercial products, such as Metaloc N31 (produced by Toyo Kagaku Kenkyusho Co., Ltd.), Thixon 715 (produced by Rohm and Haas; composed of Thixon 715A, which is a phenol resin-based adhesive solution, and Thixon 715B, which is a hexamethylenetetramine-containing curing agent), TS1677-13 (produced by LORD Far East, Inc.), and Chemlok 205 (produced by LORD Far East, Inc.). Preferably, adhesives comprising a novolak-type phenol resin and a resol-type phenol resin at a ratio of 9:1 to 1:9 are used. They are generally used as a single solvent solution or a mixed solvent solution of alcohol-based organic solvents, such as methanol, ethanol, and isopropanol, or ketone-based organic solvents, such as acetone, methyl ethyl ketone, and methyl isobutyl ketone.

Such phenol resins are used in an amount of about 100 to 900 parts by weight, preferably about 240 to 900 parts by weight, based on 100 parts by weight of NBR. When the phenol resin content is less than this range, adhesion to the metal becomes inferior; whereas when the content is greater than this range, adhesion to the rubber layer becomes inferior.

The white carbon (silica) may be dry-process white carbon produced by thermal decomposition of halogenated silicic acid or an organosilicon compound, or by heating reduction of silica sand and air oxidation of the evaporated SiO; wet-process white carbon produced by thermal decomposition of sodium silicate; or the like. Such an amorphous silica having a particle size of 0.01 to 0.1 µm can be used. When the particle size of silica is greater than this range, wear resistance decreases; whereas when the particle size of silica is less than this range, the particles aggregate into large clusters when the silica is dispersed in rubber, and wear resistance consequently decreases. As the silica, commercial products, such as Nipseal (produced by Nippon Silica Industry Co., Ltd.) can be used as they are. Moreover, generally used silica has a specific surface area (measured by BET) of about 20 to 300 m²/g, preferably about 50 to 250 m²/g. Although white carbon has inferior wear resistance compared to carbon black, which is generally used as a filler, the cost, handleability, and wear resistance of white carbon are excellent. Therefore, white carbon is used to improve the adhesion of the adhesive, and prevent rubber flow at a high temperature and high surface pressure.

The white carbon is used in an amount of about 15 to 100 parts by weight, preferably about 30 to 80 parts by weight, based on 100 parts by weight of NBR. When the amount of white carbon used is less than this range, target adhesion to the metal cannot be acquired, and rubber peeling occurs during friction and wear. Conversely, when the amount is greater than this range, rubber hardness increases, and rubber elasticity is lost. In addition, white carbon having a particle size of greater than this range is not preferable, because friction and wear resistance characteristics is impaired.

Examples of silane coupling agents include vinyltrialkoxysilane CH₂=CHSi(OR)₃ having an alkoxyl group containing two or more carbon atoms, preferably 2 to 4 carbon atoms, such as vinyltriethoxysilane, vinyltriisopropoxysilane, vinyltris(2-methoxyethoxy)silane, and vinyltris(2-ethoxyethoxy)silane; at least one of them is used. Vinyltrimethoxysilane having a C₁ alkoxyl group to be reacted with the white carbon (inorganic filler) has no effect of preventing aggregation.

Among alkoxyl groups having two or more carbon atoms, alkoxyl groups having greater the molecular weight are preferable. Accordingly, the alkoxyl group may be an alkoxyalkoxyl group, as shown above. Furthermore, vinyl groups more effectively act on the aggregation-preventing effect of the white carbon (inorganic filler), upon reaction with the polymer.

The silane coupling agent is used in an amount of about 2 to 10 parts by weight based on 100 parts by weight of NBR, and at a ratio of about 3 to 30 wt.%, preferably about 5 to 20 wt.%, relative to white carbon. When the amount of silane coupling agent used is less than this range, the white carbon aggregates, making the coated surface rough and impairing wear resistance. In contrast, when the amount is greater than this range, the crosslinking density of the rubber increases, impairing sealing properties, leading to cracking when the rubber is bent after heat deterioration, and causing lower wear resistance after heat deterioration.

Examples of the organic solvent used to form an adhesive solution include ketones, such as acetone, methyl ethyl ketone, methyl isobutyl ketone, dipropyl ketone, cyclohexanone, phorone, and isophorone; esters, such as ethyl acetate and butyl acetate; polyol monoethers, such as methyl cellosolve and ethyl cellosolve; and aromatic hydrocarbons, such as toluene and xylene.

The adhesive is prepared in the following manner. An NBR compound prepared by mixing NBR with various compounding agents is left for 0 to 15 days after preparation, and then cut. The cut compound is dissolved, for example, in a methyl ethyl ketone/toluene (weight ratio = 1:9) mixed solvent to prepare a rubber paste having a solid matters (NBR compound) concentration of about 10 to 30 wt.%. Subsequently, a phenol resin-based adhesive solution and an organic solvent (e.g., methyl ethyl ketone) are added to the rubber paste. The proportion of the phenol resin in the phenol resin-based adhesive solution to the NBR in the rubber paste is used as described above. The solid matters concentration (the solid matters concentration comprising the NBR compound and the phenol resin) in the adhesive is about 2 to 15 wt.%, preferably about 3 to 10 wt.%.

The dilution concentration of the adhesive solution is suitably selected depending on the coating thickness, coating method, and other conditions. The coating thickness of the adhesive is generally about 1 to 10 µm, preferably about 2 to 6 µm. When the coating thickness is less than this range, the entire irregular surface of the metal cannot be coated, and adhesion decreases. Conversely, when the coating thickness is greater than this range, flexibility may be impaired. The method for applying the adhesive solution may be any method, such as immersion, spraying, roll coater, flow coater, or injection.

Examples of the metal to be laminated with NBR through such an adhesive generally include metal plates, such as stainless steel plates, mild steel plates, zinc galvanized steel plates, SPCC plates (cold rolled steel plates), steel plates, copper plates, magnesium plates, aluminum plates, and aluminum die casting plates. Preferably usable are SUS301, SUS301H, SUS304, SUS430, and other stainless steel plates. These are generally used after being degreased, and the metal surface is roughened, as required, by shot blast, scotch brite, hairline, dull finish, or the like. Moreover, for use in sealing materials, the plate thickness is generally about 0.1 to 1 mm.

A primer layer is preferably formed on such a metal plate. The primer layer is expected to significantly enhance the heat resistance and water resistance of the rubber metal laminate. In particular, when the rubber metal laminate is used as a sealing material, it is preferable to form a primer layer.

As the primer layer, commercially available chemical solutions or prior-art solutions can be used as they are. Examples thereof include inorganic-based films, such as zinc phosphate films, iron phosphate films, films of compounds of vanadium, zirconium, titanium, molybdenum, tungsten, manganese, zinc, cerium, and other metals, specifically oxides of these metals; and organic-based films of such as silane, phenol resin, epoxy resin, and polyurethane. The primer layer is preferably a primer layer comprising an organometallic compound having at least one chelate ring and alkoxyl group, or a primer layer further comprising, in addition to the organometallic compound, metal oxide or silica, more preferably a primer layer comprising these primer layer-forming components and a hydrolysis-condensation product of amino group-containing alkoxysilane and vinyl group-containing alkoxysilane. The hydrolysis-condensation product can be used alone as a primer.

These primer components are prepared as an organic solvent solution of alcohols or ketones so as to have a solid matters concentration of about 0.2 to 5 wt.%. Water may be further added thereto in an amount of 20 wt.% or less, in so far as solution stability is maintained. The obtained primer solution is applied to a metal plate at a coating weight of about 50 to 300 mg/m² by immersion, spraying, or brushing, or by using a roll coater. After room temperature drying or hot-air drying, baking treatment is carried out at about 100 to 250°C for about 0.5 to 20 minutes, thereby forming a primer layer.

The formation of the adhesive layer on the metal plate is preferably carried out in such a manner that the adhesive solution is applied to the metal plate, on which the primer layer has been formed, and air-dried at room temperature, followed by heating at about 100 to 250° for about 5 to 30 minutes. The adhesive layer may have a single-layer structure or a multilayer structure. For example, a phenol resin-based adhesive layer comprising an organometallic compound may be formed on the primer layer, and a phenol resin-based adhesive layer comprising the aforementioned NBR compound may be further formed thereon. After such multiple applications, a rubber layer may be formed. This structure requires a greater number of steps of coating the adhesive, but can enhance adhesion between the primer layer and the rubber layer.

On the adhesive layer, a rubber paste comprising an NBR compound solution is applied as an unvulcanized rubber layer so that the thickness is about 10 to 200 µm. After drying, vulcanization is conducted at about 150 to 230°C for about 0.5 to 30 minutes. For the purpose of preventing adhesion to the rubber, a resin- or graphite-based anti-adhesion agent may be applied to the obtained rubber metal layer, as required.

### EXAMPLES

The following describes the present invention with reference to Examples.

### Example 1

(1) NBR (N235S, produced by JSR Corporation; CN content: 36%)

| | |
|---|---|
| | 100 parts by weight |
| SRF carbon black (I₂ adsorption: 29 g/kg, DBP oil absorption: 72 ml/100 g) | 60 parts by weight |
| White carbon (Nipseal LP, produced by Nippon Silica Industry Co., Ltd.; specific surface area: 200 m²/g, particle size: 0.02 µm) | 40 parts by weight |
| Zinc oxide | 5 parts by weight |
| Stearic acid | 2 parts by weight |
| Antioxidant (Nocrac 224, produced by Ouchi Shinko Chemical Industrial Co., Ltd.) | 2 parts by weight |

| | |
|---|---|
| Triallyl isocyanurate (TAIC, produced by Nippon Kasei Chemical Co., Ltd.) | 1.2 parts by weight |
| 1,3-bis(tert-butylperoxyisopropyl)benzene (Sunperox TY-13, produced by Sanken Kako Co., Ltd.) | 6 parts by weight |
| Vinyltris(2-methoxyethoxy)silane (A-172, produced by | |
| Momentive Performance Materials Inc.) | 3 parts by weight |
| (Total) | 219.2 parts by weight |

Regarding the above components, the polymer was masticated in a kneader, and then the carbon black, zinc oxide, stearic acid, and antioxidant were first added and kneaded. Subsequently, the white carbon and silane coupling agent were added together and kneaded under conditions where the maximum temperature was 130°C. Thereafter, the organic peroxide and crosslinking aid were added and kneaded with an open roll, thereby obtaining an NBR compound.
(2) The NBR compound (250 parts by weight) left for ten days after preparation, 75 parts by weight of methyl ethyl ketone, and 675 parts by weight of toluene were stirred and mixed to prepare a rubber paste having a solid matters (NBR compound) concentration of 25 wt.%.
(3) A silane-based primer comprising 1.0 wt.% of titanium tetra(acetylacetonate), 2.5 wt.% of alkoxysilane hydrolysis condensate, 10.0 wt.% of water, and 86.5 wt.% of methanol was applied by an immersion method to the surface of a 0.2-mm-thick stainless steel plate (SUS301, produced by Nisshin Steel Co., Ltd.), which had been subjected to alkaline degreasing. After drying with heated air, baking treatment was performed at about 200°C for about 5 minutes, thereby forming a primer layer (coating weight: 250 mg/m²).

The alkoxysilane hydrolysis condensate used here was produced as follows. In a three-necked flask equipped with a stirrer, a heating jacket, and a dropping funnel, 40 parts by weight of γ-aminopropyltriethoxysilane and 20 parts by weight of water were charged. Acetic acid was added thereto to adjust the pH to 4 to 5, and the mixture was stirred for several minutes. While stirring was further continued, 40 parts by weight of vinyltriethoxysilane was gradually added dropwise using a dropping funnel. After completion of the dropping, heating under reflux was carried out at about 60°C for 5 hours, and the temperature was cooled to room temperature, thereby obtaining an alkoxysilane hydrolysis condensate.

(4) Phenol resin-based adhesive solution (Thixon 715A, produced by Rohm and Haas Company; the solid matters concentration of the resol phenol resin and novolak phenol resin in the organic solvent solution: 38 wt.%, which was equivalent to 217 parts by weight of phenol resin based on 100 parts by weight of NBR): 97 parts by weight

| | |
|---|---|
| Hexamethylenetetramine-containing curing agent (Thixon 715-B, produced by Rohm and Haas Company) | 3 parts by weight |
| Rubber paste obtained in step (2) above (solid matters concentration: 25 wt.%) | 68 parts by weight |
| Methyl ethyl ketone | 969 parts by weight |

An adhesive composition solution comprising the above components (solid matters concentration: 5 wt.%) was applied by immersion to the primer layer-formed stainless steel plate obtained in step (3) above, and air-dried at room temperature, followed by heating at about 200°C for about 5 minutes. Thus, an adhesive layer with a thickness of about 2 µm was formed.
(5) The rubber paste obtained in step (2) above was applied to the stainless steel plate, on which the primer layer and the adhesive layer had been formed, using a knife coater and dried to form an unvulcanized rubber layer with a thickness of about 20 µm. Subsequently, press vulcanization was carried out at 180°C for 6 minutes to form an NBR rubber layer.
(6) Isocyanate-modified 1,2-polybutadiene

| | |
|---|---|
| (TP1001, produced by Nippon Soda Co., Ltd.; 50 wt.% butyl acetate solution) | 25 parts by weight |
| Hydroxyl group-containing 1,2-polybutadiene (GQ-1000, produced by Nippon Soda Co., Ltd.; 45 wt.% xylene solution) | 25 parts by weight |
| Polyethylene wax (molecular weight: 2,000, melting point: 110°C, particle size: 1 µm, 15 wt.% toluene solution) | 125 parts by weight |
| Polytetrafluoroethylene (particle size: 1 µm, 15 wt.% toluene dispersion) | 125 parts by weight |
| Toluene | 950 parts by weight |

A surface-coating agent of the above composition was applied by immersion to the surface of the vulcanized rubber layer-formed stainless steel obtained in step (5) above. Heat treatment with heated air was carried out at 200°C for 5 minutes to form an adhesion preventing layer with a thickness of 5 µm. Thus, a rubber metal laminate was produced.

Regarding the rubber metal laminate obtained in this manner, the following items were measured.

Particle size of rubber paste:
According to JIS K5400 corresponding to ASTM D1210

An NBR compound immediately after kneading or after being left for ten days at 25°C was cut and then dissolved in a solvent, and the particle size of undissolved particles was measured

High temperature friction and wear test:
A rubber metal laminate produced by using a rubber paste prepared by using an NBR compound after being left for ten days at 25°C after kneading was subjected to measurement according to JIS K7125 and P8147 corresponding to ASTM D1894

Using a surface property tester (produced by Shinto Scientific Co., Ltd.), a friction and wear test was performed by a reciprocating motion test under the following conditions:
Mating material: hard chrome galvanizing steel ball (diameter: 10 mm)
Transfer rate: 400 mm/min
Reciprocating motion width: 30 mm
Temperature: 150°C
Load: 2.5 kg
The number of times until the rubber was worn so that the adhesive layer was exposed was measured

### Compression test:

A stainless steel convex body was compressed on the rubber side of the rubber metal laminate at 150°C, 2 ton f/cm² (98 MPa) for 5 minutes, and the condition of the rubber (the presence of peeling) was visually evaluated

### Adhesive strength:

According to JIS K6850 corresponding to ASTM D1002 (measured using a universal testing machine under the following conditions: atmosphere temperature: ambient temperature, tension rate: 50 mm/min, distance between chucks: 50 mm)

Adhesive strength was measured in the beginning, after immersion in water (immersion at 95°C for 120 hours), and after immersion in an antifreeze solution (a mixture of Toyota Genuine LLC and water at a volume ratio of 1:1) (immersion at 100°C for 120 hours).

### Example 2

In Example 1 (1), the same amount of vinyltri(isopropoxy)silane (Z-6550, produced by Dow Corning Toray Co., Ltd.) was used as a silane-based coupling agent.

### Example 3

In Example 1 (1), the same amount of vinyltriethoxysilane (A-151, produced by Momentive Performance Materials Inc.) was used as a silane-based coupling agent.

### Comparative Example 1

In Example 1 (1), the same amount of 3-methacryloxypropyltrimethoxysilane of the formula: CH₂=C(CH₃)COOC₃H₆Si(OCH₃)₃ (Z-6030, produced by Dow Corning Toray Co., Ltd.) was used as a silane-based coupling agent.

### Comparative Example 2

In Example 1 (1), the same amount of n-octyltriethoxysilane of the formula: CH₃(CH₂)₇Si(OC₂H₅)₃ (A-137, produced by Momentive Performance Materials Inc.) was used as a silane-based coupling agent.

### Comparative Example 3

In Example 1 (1), an NBR compound was obtained without using a silane-based coupling agent.

### Comparative Example 4

In Example 1 (1), an NBR compound was obtained without using white carbon and a silane-based coupling agent.

### Comparative Example 5

In Example 1 (4), an adhesive composition solution comprising the following components was used:
Phenol resin-based adhesive solution (Phenolite PN resin, produced by DIC Corporation; the solid matters concentration of the novolak phenol resin in the methanol solvent solution: 38 wt.%): 97 parts by weight
Hexamethylenetetramine-containing curing agent (Thixon 715-B): 3 parts by weight
Methyl ethyl ketone: 967 parts by weight

### Comparative Example 6

In Example 1 (4), the following components were sequentially added to prepare an adhesive composition solution.
Unvulcanized NBR (N-237, produced by JSR Corporation; medium-high nitrile): 2 parts by weight
Resol-type phenol resin (Chemlok TS1677, produced by LORD Far East, Inc.): 5 parts by weight
Chlorinated polyethylene (SE-200Z, produced by Daiso Co., Ltd.): 3 parts by weight
Methyl ethyl ketone: 90 parts by weight
   The prepared adhesive composition solution was applied to a primer layer-formed stainless steel plate and air-dried at room temperature, followed by heating at about 200°C for about 5 minutes. Thus, an adhesive layer with a thickness of about 2 µm was formed.

### Comparative Example 7

In Example 1 (1), the same amount of vinyltrimethoxysilane (A 171, produced by Momentive Performance Materials Inc.) was used as a silane-based coupling agent.

### Comparative Example 8

In Example 1 (1), the same amount of vinyltriacetoxysilane (Z-6075, produced by Dow Corning Toray Co., Ltd.) was used as a silane-based coupling agent.

### Comparative Example 9

In Example 1 (4), the following components were sequentially added to prepare an adhesive composition solution.
Resol-type phenol resin (Chemlok TS1677, produced by LORD Far East, Inc.): 5 parts by weight
Methyl ethyl ketone: 95 parts by weight
   The prepared adhesive composition solution was applied to a primer layer-formed stainless steel plate and air-dried at room temperature, followed by heating at about 150°C for about 5 minutes. Thus, an adhesive layer with a thickness of about 2 µm was formed.

Steps other than those described in Examples 2 and 3, and Comparative Examples 1 to 9, and measurements were carried out in the same manner as in Example 1. The following table shows the results obtained in the Examples, including Example 1, and the Comparative Examples.

**Table**

| | Example | | | Comparative Example | | | | | | | | |
|---|---|---|---|---|---|---|---|---|---|---|---|---|
| Measurement/ evaluation item | 1 | 2 | 3 | 1 | 2 | 3 | 4 | 5 | 6 | 7 | 8 | 9 |
| Rubber paste particle size (µm) | | | | | | | | | | | | |
| Immediately after kneading | 50 | 50 | 50 | 50 | 50 | 60 | 70 | 50 | 50 | 60 | 60 | 50 |
| 10 days later | 80 | 80 | 80 | >200 | >200 | >200 | 80 | 80 | 80 | >200 | >200 | 80 |
| | | | | | | | | | | | | |

| High temperature friction and wear test | | | | | | | | | | | | |
|---|---|---|---|---|---|---|---|---|---|---|---|---|
| Number of times until the adhesion layer was exposed | 250 | 230 | 220 | 90 | 70 | 80 | 80 | 200 | 150 | 110 | 100 | 60 |
| | | | | | | | | | | | | |

| Compression test | | | | | | | | | | | | |
|---|---|---|---|---|---|---|---|---|---|---|---|---|
| Presence of rubber surface peeling | Nil | Nil | Nil | Nil | Nil | Nil | Observed | Nil | Nil | Nil | Nil | Observed |
| | | | | | | | | | | | | |

| Adhesive strength (MPa) | | | | | | | | | | | | |
|---|---|---|---|---|---|---|---|---|---|---|---|---|
| Beginning | 23 | 25 | 24 | 14 | 16 | 15 | 20 | 23 | 18 | 25 | 24 | 15 |
| After water immersion | 21 | 22 | 19 | 9 | 11 | 10 | 8 | 18 | 15 | 14 | 15 | 12 |
| After antifreeze solution immersion | 22 | 24 | 18 | 8 | 10 | 9 | 10 | 5 | 17 | 11 | 12 | 13 |

## Claims

1. A rubber metal laminate comprising NBR and metal that are bonded to each other through an adhesive comprising novolak-type and resol-type phenol resins, NBR, white carbon, and a vinyltrialkoxysilane coupling agent having an alkoxyl group containing two or more carbon atoms.

2. The rubber metal laminate according to claim 1, wherein the metal is stainless steel.

3. The rubber metal laminate according to claim 2, wherein the metal is a primer-coated stainless steel plate.

4. The rubber metal laminate according to claim 1, wherein the silane-based coupling agent having an alkoxyl group containing two or more carbon atoms is a silane-based coupling agent having an alkoxyl group or an alkoxyalkoxyl group.

5. The rubber metal laminate according to claim 1, wherein the adhesive is a mixed solution of a phenol resin-based adhesive solution and a rubber paste that is an organic solvent solution of an NBR compound comprising NBR, white carbon, and a silane coupling agent.

6. The rubber metal laminate according to claim 1, wherein the NBR to be laminated with the metal is the same as the NBR used as an adhesive component.

7. The rubber metal laminate according to claim 5, wherein the NBR to be laminated with the metal is the same as the NBR used as an adhesive component.

8. An adhesive for laminating NBR and metal, the adhesive comprising a phenol resin, NBR, white carbon, and a vinyltrialkoxysilane coupling agent having an alkoxyl group containing two or more carbon atoms.

9. The adhesive for laminating NBR and metal according to claim 8, wherein the phenol resin is used in an amount of 100 to 900 parts by weight, the white carbon is used in an amount of 15 to 100 parts by weight, and the silane coupling agent is used in an amount of 2 to 10 parts by weight, based on 100 parts by weight of NBR.

## Patentansprüche

1. Gummi-Metall-Laminat, umfassend NBR und Metall, die miteinander durch einen Klebstoff verbunden sind, der Phenolharze vom Novolak-Typ und vom Resol-Typ, NBR, weißen Kohlenstoff und ein Vinyltrialkoxysilan-Kupplungsmittel mit einer Alkoxygruppe, die zwei oder mehr Kohlenstoffatome enthält, umfasst.

2. Gummi-Metall-Laminat gemäß Anspruch 1, wobei das Metall Edelstahl ist.

3. Gummi-Metall-Laminat gemäß Anspruch 2, wobei das Metall eine Primer-beschichtete Edelstahlplatte ist.

4. Gummi-Metall-Laminat gemäß Anspruch 1, wobei das Silanbasierte Kupplungsmittel mit einer Alkoxygruppe mit zwei oder mehr Kohlenstoffatomen ein Silan-basiertes Kupplungsmittel mit einer Alkoxygruppe oder einer Alkoxyalkoxygruppe ist.

5. Gummi-Metall-Laminat gemäß Anspruch 1, wobei der Klebstoff eine gemischte Lösung von einer Phenolharzbasierten Klebstofflösung und einer Kautschukpaste ist, die eine organische Lösungsmittellösung einer NBR-Mischung (NBR compound) ist, die NBR, weißen Kohlenstoff und ein Silankupplungsmittel umfasst.

6. Gummi-Metall-Laminat gemäß Anspruch 1, wobei das mit dem Metall zu laminierende NBR das gleiche wie das als Klebstoffbestandteil verwendete NBR ist.

7. Gummi-Metall-Laminat gemäß Anspruch 5, wobei das mit dem Metall zu laminierende NBR das gleiche wie das als Klebstoffbestandteil verwendete NBR ist.

8. Klebstoff zum Laminieren von NBR und Metall, wobei der Klebstoff ein Phenolharz, NBR, weißen Kohlenstoff und ein Vinyltrialkoxysilan-Kupplungsmittel mit einer Alkoxygruppe mit zwei oder mehr Kohlenstoffatomen umfasst.

9. Klebstoff zum Laminieren von NBR und Metall gemäß Anspruch 8, wobei, bezogen auf 100 Gewichtsteile NBR, das Phenolharz in einer Menge von 100 bis 900 Gewichtsteilen verwendet wird, der weiße Kohlenstoff in einer Menge von 15 bis 100 Gewichtsteilen verwendet wird und das Silankupplungsmittel in einer Menge von 2 bis 10 Gewichtsteilen verwendet wird.

## Revendications

1. Stratifié de caoutchouc/métal comprenant du NBR et du métal qui sont liés l'un à l'autre par le biais d'un adhésif comprenant des résines phénoliques de type novolaque et de type résol, du NBR, du carbone blanc, et un agent de couplage au vinyltrialcoxysilane ayant un groupe alcoxyle contenant deux atomes de carbone ou plus.

2. Stratifié de caoutchouc/métal selon la revendication 1, dans lequel le métal est de l'acier inoxydable.

3. Stratifié de caoutchouc/métal selon la revendication 2, dans lequel le métal est une plaque d'acier inoxydable revêtue d'une couche d'apprêt.

4. Stratifié de caoutchouc/métal selon la revendication 1, dans lequel l'agent de couplage à base de silane ayant un groupe alcoxyle contenant deux atomes de carbone ou plus est un agent de couplage à base de silane ayant un groupe alcoxyle ou un groupe alcoxyalcoxyle.

5. Stratifié de caoutchouc/métal selon la revendication 1, dans lequel l'adhésif est une solution mixte d'une solution adhésive à base de résine phénolique et d'une pâte de caoutchouc qui est une solution de solvant organique d'un composé NBR comprenant du NBR, du carbone blanc, et un agent de couplage au silane.

6. Stratifié de caoutchouc/métal selon la revendication 1, dans lequel le NBR devant être stratifié avec le métal est identique au NBR utilisé en tant que composant adhésif.

7. Stratifié de caoutchouc/métal selon la revendication 5, dans lequel le NBR devant être stratifié avec le métal est identique au NBR utilisé en tant que composant adhésif.

8. Adhésif pour stratifier du NBR et du métal, l'adhésif comprenant une résine phénolique, du NBR, du carbone blanc et un agent de couplage au vinyltrialcoxysilane ayant un groupe alcoxyle contenant deux atomes de carbone ou plus.

9. Adhésif pour stratifier du NBR et du métal selon la revendication 8, dans lequel la résine phénolique est utilisée dans une quantité de 100 à 900 parties en poids, le carbone blanc est utilisé dans une quantité de 15 à 100 parties en poids, et l'agent de couplage au silane est utilisé dans une quantité de 2 à 10 parties en poids, sur la base de 100 parties en poids de NBR.
